# EUROPEAN PATENT SPECIFICATION

(11) **EP 3 098 652 B1**
(45) Date of publication and mention of the grant of the patent: **08.11.2017**
(21) Application number: 15169376.9
(22) Date of filing: 27.05.2015
(51) Int. Cl.: G03B 17/12, H04N 5/225, G03B 3/02, G02B 7/02

(54) **MOUNTING SYSTEM FOR A CAMERA AND A CAMERA**
MONTAGESYSTEM FÜR EINE KAMERA UND EINE KAMERA
SYSTÈME DE MONTAGE POUR UNE CAMÉRA ET CAMÉRA

(43) Date of publication of application: 30.11.2016
(73) Proprietor: Axis AB, 223 69 Lund (SE)
(72) Inventor: Lennerstedt, Malte, 224 71 Lund (SE); Larsson, Stefan, 226 52 Lund (SE)
(74) Representative: Awapatent AB

(56) References cited:
- EP-A2- 1 174 748
- DE-A1-102011 002 299
- US-A1- 2007 077 051

## Description

### Field of invention

The inventions relates to a mounting system for a camera, the mounting system comprising a first part adapted to fixedly support an image sensor, and a second part adapted to fixedly support an optical system.

The invention also relates to a camera comprising a body member fixedly supporting an image sensor, and a fixture fixedly supporting an optical system.

### Technical Background

When designing cameras and mounting systems for cameras it is typically of importance to secure that the optical system is able to correctly focus incoming light onto the image sensor. In this context it is typically desirable that the mounting system is able to provide a specific distance between the optical system and the image sensor in order to provide correct focus of a view onto the image sensor. In order to actually achieve the specific distance, the different parts are typically manufactured with tight tolerances. The assembly also typically need be performed with tight tolerances.

EP 1 174 748 A2 discloses an optical lens unit having a mechanism for adjusting the focal point of the optical lens. The optical lens unit comprises an optical lens for focusing a light beam, a hollow cylindrical lens holder having, on an inner circumferential surface, a support section contacting one surface of the optical lens and supporting a circumferential part thereof, an elastic member interposed between the support section and the optical lens, and a lens fastener movable along an optical axis of the optical lens, clamping the optical lens jointly with the lens holder, and contacting, at one end, the other surface of the optical lens. The lens fastener pushes the circumferential part of the optical lens, thereby to deform the elastic member to adjust the position of a focal point of the optical lens.

DE 10 2011 002 299 A1 discloses an optics support and method for assembling an optics support. The optics support has a first element forming an optical element, an annular elastic compensation element and a second element formed by two parts. An elastic compensation element is disposed between the optical element and the second element, The first and second parts of the second element are adapted to be locked in position using a snap-lock, whereby the optical component is fixable to the other element under prestress of the elastic compensation element. The first member has at least two retaining projections and the second element has, to the retaining projections, associated compensation openings.

US 2007/0077051 A1 discloses a micro camera module that is manually adjustable between a close-up mode and an infinite mode includes a lens assembly adjustably mounted within a sleeve that is adjustably mounted into a housing. A biasing member is disposed between the sleeve and the housing.

### Summary of invention

It is an object of the invention to provide an improved design addressing the issue of being able to achieve a desired distance between the optical system and the image sensor.

This object has been achieved by a mounting system in accordance with claim 1. The mounting system comprises a first part adapted to fixedly support an image sensor, and a second part adapted to fixedly support an optical system, wherein the second part is rotatably adjustably supported by the first part such that a distance, along an optical path, between the image sensor and the optical system is adjustable, wherein the first part and the second part are provided with interacting obliquely oriented surfaces such that a relative rotation between the first part and the second part provides adjustment of the adjustable distance, wherein the first part comprises an abutment section which is arranged along a geometrical closed loop around the optical path, a closed loop flexible member which is adapted to be clamped between the second part and the abutment section, and which is adapted to flex in response to the adjustment of the adjustable distance, wherein the abutment section comprises a plurality of abutment portions and a plurality of cavities alternatingly arranged along the abutment section.

The result of this is that the flexible member will be clamped between the abutment section and the second part and the mounting system will frictionally prevent the first and second part from being rotated relative to each other. The clamped flexible member will also provide a separation force forcing the first and second part from each other such that any play in the interacting surfaces will be forced in a specific direction. This eliminates or at least reduces the influence any such play has on the maintenance of the correct distance between the optical system and the image sensor.

Moreover, by providing the abutment section with a plurality of abutment portions and a plurality of cavities alternatingly arranged along the abutment section it is possible to make use of the flexibility of the flexible member to a larger extent. When the flexible member is clamped between the abutment section and the second part and the first and second part is moved further towards each other, at least the portions of the flexible member between the abutment portions and the second part will become even more forcefully clamped and will decrease in size in the clamping direction (typically the same as the direction of the optical path). Those portions of the flexible member have a tendency to increase in size in any direction perpendicular to the clamping direction. The alternatingly arranged cavities are adapted to at least partly accommodate such increase in size in directions perpendicular to the clamping direction. Since the increased size in the perpendicular directions is accommodated in the cavities, further adjustment may be provided without the forces in the system reaching excessive levels. Thereby a large span of adjustability with acceptable clamping forces has been achieved.

The abutment portions may, relative to the cavities, be raised along the adjustable distance towards the second part. This way the abutment portions will provide early force build-up such that sufficient clamping force is provided early in the adjustment span and the cavities will accommodate portions of the flexible member and thereby allow the flexible member to the clamped between the abutment portions and the second part to a comparably large extent in distance without any excessive build-up of clamping force.

The abutment portions may each have a length along the circumferential length of the geometrical loop being between 2-15%, preferably between 2-8% of the circumferential length of the geometrical loop. If the abutment portions are too long in the circumferential direction the friction forces may compromise the possibility for the clamped portions to expand in a direction perpendicular to the clamping direction. If the abutments portions are too small it is difficult to achieve the desired clamping force and still having sufficient flexibility in the mounting system to provide the desired flexibility.

The abutment section may be formed as a groove, the groove extending along the geometrical closed loop and facing the second part. Thereby the flexible member is secured in the correct position.

The abutment portions may each have a length along the geometrical loop being between 0.5 and 2 times a cross-sectional width of the groove. This is considered to provide a suitable balance between the extensions of the abutment portions in the different directions. The flexible member may expand in the desired manner in a direction perpendicular to the clamping direction and there is sufficient size to provide the desired clamping force and still having sufficient flexibility in the mounting system to provide the desired flexibility.

The closed loop flexible member may be formed of a closed loop of elastomeric material, preferably having a hardness of between 20-70° Shore A, preferably 20-60° Shore A, more preferably 25-50° Shore A, and most preferably 25-40° Shore A. An elastomeric material of this kind is able to provide the desired flexibility and the desired clamping force. Shore A may be measured according to ASTM D2240.

The closed loop flexible member may have a cross-sectional dimension, along the optical path, being greater than, preferably 2 times, a difference in distance between a first distance measured between the abutment portions and the second part and a second distance measured between the cavities and the second part. This difference in distance between the first distance and the second distance along the optical path may also be said to be the height of the abutment portions relative to the bottom of the groove shown in the preferred embodiment. The flexible member having a larger cross-section along the optical patch provides good flexibility.

The closed loop flexible member may have a cross-sectional dimension, across the optical path, being greater than a width of the groove in which the closed loop flexible member is arranged. This may facilitate the provision of a sealing function.

The closed loop flexible member has a uniform cross-section, preferably circular. This is suitable since the flexible member need not be oriented in any specific orientation when assembling the mounting system.

The abutment section may be formed as a groove, the groove extending along the geometrical closed loop and facing the second part, wherein the abutment portions may, relative to the cavities, be raised from the bottom of the groove along the adjustable distance towards the second part, and wherein the abutment portions may be raised a distance being between 0.2 to 0.8 times a cross-sectional width of the groove.

The closed loop flexible member may be adapted to sealingly interact with both the first part and the second part such that there is a seal being formed between the first part and the second part and extending around the optical path. This may e.g. be used to provide a sealing function preventing dust and moisture to reach the image sensor or the non-accessible end of the optical system.

The second part may be insertable into the first part, wherein the obliquely oriented surfaces of the first part may be provided on an inwardly facing envelope surface and the obliquely oriented surfaces of the second part may be provided on an outwardly facing envelope surface. This is a compact design since the second part is adapted to support the optical system extending along the optical path. With this design the fixture holding the optical system may be designed as a circular cylinder provided with the obliquely oriented surfaces directly on the outwardly facing envelope surface.

In a preferred embodiment the first part is a body member fixedly supporting an image sensor, and wherein the second part is a fixture fixedly supporting an optical system.

The above mentioned object has also been achieved by a camera comprising, a body member fixedly supporting an image sensor, and a fixture fixedly supporting an optical system, wherein the fixture is rotatably adjustably supported by the body member such that a distance, along an optical path along which light from the optical system is adapted to travel to the image sensor, between the image sensor and the optical system is adjustable, wherein the body member and the fixture are provided with interacting obliquely oriented surfaces such that a relative rotation between the body member and the fixture provides adjustment of the adjustable distance, wherein the body member comprises an abutment section which is arranged along a geometrical closed loop around the optical path, the camera further comprising a closed loop flexible member which is adapted to be clamped between the fixture and/or the optical system on the one hand and the abutment section on the other hand, and which is adapted to flex in response to the adjustment of the adjustable distance, wherein the abutment section comprises a plurality of abutment portions and a plurality of cavities alternatingly arranged along the abutment section.

The preferred embodiments disclosed in the discussion above and in the dependent claims are also applicable as preferred embodiments of the camera. The advantages associated with the different features have been discussed in detail above in relation to the mounting system and that discussion is also applicable to the camera.

### Brief description of the drawings

The invention will by way of example be described in more detail with reference to the appended schematic drawings, which shows a presently preferred embodiment of the invention.
Fig 1 discloses a camera.

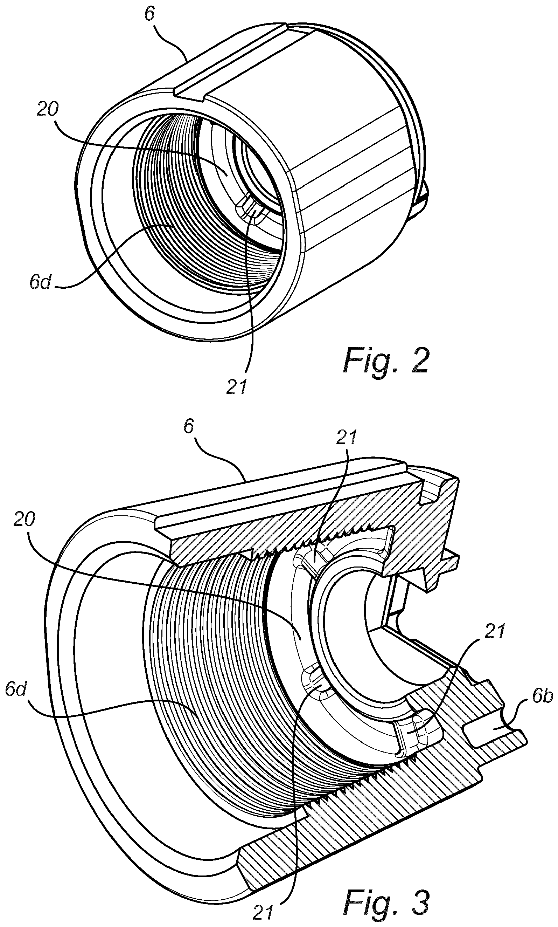

Fig 2 discloses a body member forming part of the camera of fig 1.
Fig 3 is a view and partially a cross-section of the body member of fig 2.
Fig 4 is a plan view of the body member of figs 2 and 3.
Fig 5 is a plan view of the body member of figs 2-4.
Fig 6 is a cross-section along line A-A in fig 5.
Fig 7 is a cross-section along line B-B in fig 5.
Fig 8 is a view of a closed loop flexible member.
Fig 9 is a cross-section of the member of fig 8.
Fig 10 is a view of an optical system.
Fig 11 is a view of an electric circuit board comprising an image sensor.

### Detailed description of preferred embodiments

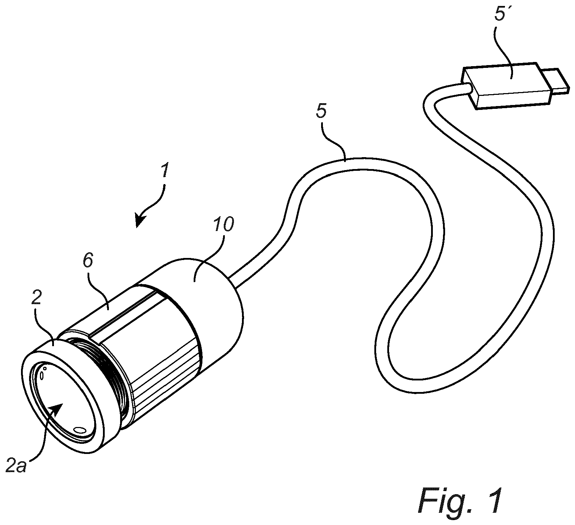

As shown in fig 1, the digital camera 1 comprises an optical system 2a, an image sensor 3, electric circuitry 4 connected to the image sensor 3, a cable 5 connected to and extending from the electric circuitry 4, and a body member 6 supporting and partly housing the optical system 2, the image sensor 3 and the electric circuitry 4. The optical system (2a) is adapted to direct light towards the image sensor (3) along an optical path (P). The camera 1 further comprises a housing 10 formed of two separate parts adapted to be connected to each other in a connected state to thereby form the housing.

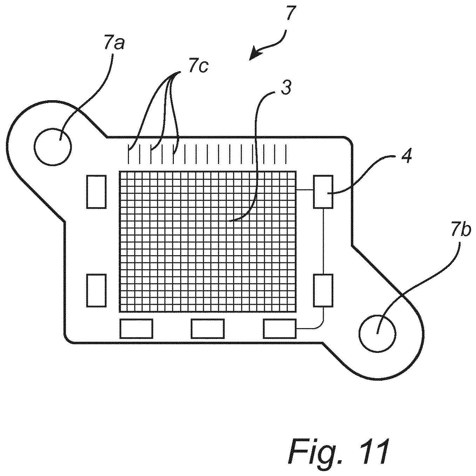

As shown in fig 11, the image sensor 3 and electric circuitry 4 is arranged on a circuit board 7.

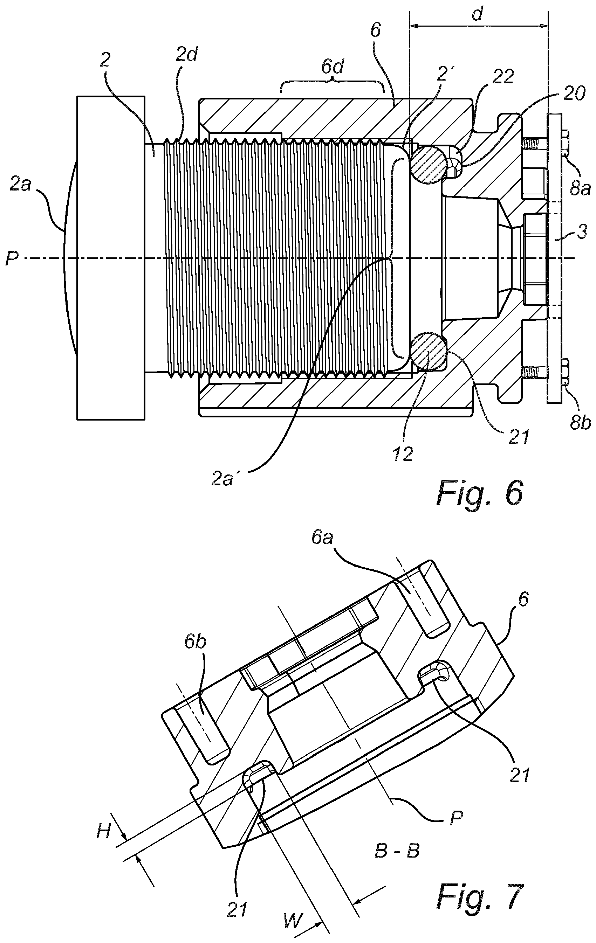

As shown in fig 6, the circuit board 7 may be adapted to be attached to the body member 6 and be held in place by screws 8a, 8b extending through the holes 7a, 7b in the circuit board 7 and threaded into the holes 6a, 6b of the body member 6. Other alternative designs are contemplated. The holes 7a, 7b may e.g. be formed as recesses open towards the perimeter of the circuit boards instead of being through holes. The optical system 2 is adapted to be threaded into the body member 6. The circuit board 7 is provided with coupling pins 7c to which the different strands of the cable 5 is detachably or non-detachably connected.

As shown in fig 1, the cable 5 is, at the other end of the cable 5, provided with a standard connector 5' to a computer or network. An USB-connector is shown in fig 1 but other connectors are contemplated, such as a standard 8P8C connection (often referred to as RJ45 for telecommunication or Ethernet network communication). Other connectors considered suitable may also be used. The cable 5 is an electrical cable for transmitting from the electric circuitry 4 an electrical signal representing an image detected by the image sensor 3. The cable is also used for providing electrical power to the electric circuitry 4. The cable may in cross-section have a plurality of electrical wires encased in a casing of an elastic material, preferably an electrically insulating, elastic, polymeric material.

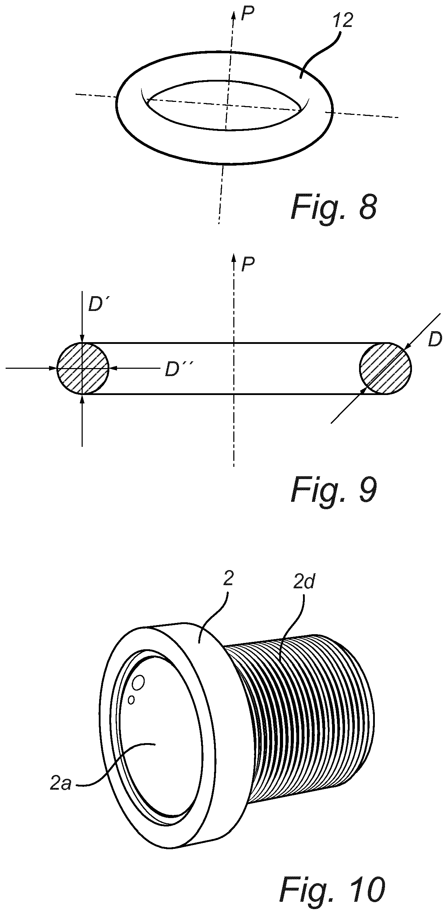

As shown in fig 6, the mounting system for the camera comprises in short a first part 6 adapted to fixedly support an image sensor 3, a second part 2 adapted to fixedly support an optical system 2a, and a closed loop flexible member (also shown in fig 8 and fig 9) which is adapted to be clamped between the first and second parts 6, 2.

The second part 2 is rotatably adjustably supported by the first part 6. The first part 6 and the second part 2 are provided with interacting obliquely oriented surfaces such that a relative rotation between the first part 6 and the second part 2 provides a relative translational movement. Thereby there is provided an adjustment of a distance d, along an optical path P, between the optical system 2a and the image sensor 3. By being able to adjust the distance between the optical system 2a and the image sensor 3 it is possible to provide correct focus of incoming light onto the image sensor 3 even if any of the parts is not manufactured or assembled such that correct focus is immediately provided for.

The second part is a fixture 2 holding the optical system 2a. The fixture 2 is as a circular cylinder provided with the obliquely oriented surfaces on the outwardly facing envelope surface. The body member 6 comprises a circular cylindrical envelope with the obliquely oriented surfaces on the inwardly facing envelope surface. The second part 2 is rotatably insertable into the first part 6. The obliquely oriented surfaces of the first and second parts 6, 2 are typically threads 6d, 2d.

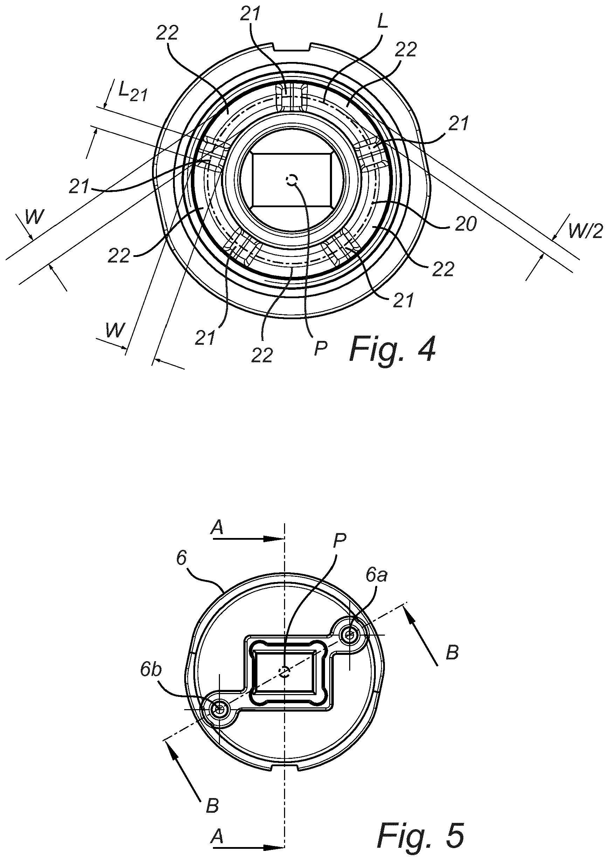

As shown in fig 6 and fig 4, the body member 6 comprises an abutment section 20 which is arranged along a geometrical closed loop L around the optical path P. The closed loop flexible member 12 is adapted to be clamped between the second part 2 and the abutment section 20. The closed loop flexible member 12 is adapted to flex and act as a spring in response to the adjustment of the adjustable distance d.

As is shown in fig 4, the abutment section 20 is formed as a groove extending along the geometrical closed loop L and facing the second part 2. The abutment section 20 is provided with a plurality of abutment portions 21 located at different positions along the loop L, i.e. at different angular positions relative to the optical path P. In the preferred embodiment there are five abutment portions 21 arranged around the loop L. The abutment portions 21 are equidistantly arranged around the loop L. Alternatively, the number of abutment portions 21 may be different from this. The number may e.g. be three or more, four or more, or five or more. Between the abutment portions 21 there is formed a plurality of cavities 22. The abutment portions 21 relative to the cavities 22 raised along the adjustable distance d towards the second part 2. In the preferred embodiment, the cavities 22 are formed of the parts of the groove not provided with the raised abutment portions 21. Thus, the abutment section 20 comprises a plurality of abutment portions 21 and a plurality of cavities 22 alternatingly arranged along the abutment section 20.

It is considered appropriate that the abutment portions each have a length along the circumferential length of the geometrical loop L being between 1-15%, preferably between 2-8% of the circumferential length of the geometrical loop L. In the preferred embodiment each abutment portion 21 has a length L21 being about 4% of the circumferential length of the geometrical loop L. The length of the geometrical loop L is measured along a diameter halfway between the inner diameter and outer diameter of the abutment section 20.

It is considered appropriate that the abutment portions 21 together in total have a length L₂₁ (i.e. the length of each portion times the number of portions) being between 10-75%, preferably between 10-50%, more preferably between 10-30% of the circumferential length of the geometrical loop L. In the preferred embodiment the total length of the abutment portions 21 is about 20% of the circumferential length of the geometrical loop L.

It is considered appropriate that the abutment portions 21 each have a length L₂₁ along the geometrical loop L being between 0.5 and 2 times a cross-sectional width W of the groove. In the preferred embodiment the abutment portions 21 each have a length L₂₁ along the geometrical loop L being about 70% of the cross-sectional width W of the groove.

The closed loop flexible member 12 is formed of a closed loop of elastomeric material, such as rubber. The elastomeric material has a hardness of about 30° Shore A. As shown in fig 8 and fig 9, the flexible member 12 has a uniform circular cross-section with a diameter D. Such a member is typically referred to as an O-ring. That is, the closed loop flexible member 12 has a cross-sectional dimension D' along the optical path P being said diameter D. It is considered appropriate that this dimension D' is greater than, preferably 2 times, a difference in distance between the abutment portions 21 and the second part 2 and the cavities 22 and the second part 2. In the preferred embodiment the difference in distance between the abutment portions 21 and the second part 2 and the cavities 22 and the second part 2 is the same as the height H by which the abutment portions 21 are raised above the bottom of the groove formed by the cavities 22. It is considered appropriate that this height H is about 20-150%, preferably about 25-80%, of the width W of the groove. In the preferred embodiment the height H is about 50% of the width W of the groove.

The closed loop flexible member 12 has a cross-sectional dimension D" across the optical path P being the diameter D. This dimension D" is greater than a width W of the groove in which the closed loop flexible member 12 is arranged. The walls of the groove are continuous. The flexible member 12 sealingly interacts with both the body member 6 and the second part 2 and thereby a sealing function is provided extending around the optical path P and thereby it is prevented that dust or moisture penetrate to the void inside the body member 6 where the image sensor 3 is exposed towards the optical system 3.

When assembled, there is provided a digital camera 1 with a body member 6 fixedly supporting an image sensor 3, a fixture 2 fixedly supporting an optical system 2a, and a closed loop flexible member 12 which is clamped between the fixture 2 and the body member 6. The fixture 2 is rotatably adjustably supported by the body member 6 such that a distance d, along an optical path P, between the image sensor 3 and the optical system 2a is adjustable. To provide the rotatably adjustably support the body member 6 and the fixture 2 are provided with interacting obliquely oriented surfaces such that a relative rotation between the body member 6 and the fixture 2 provides adjustment of the adjustable distance d.

It is contemplated that there are numerous modifications of the embodiments described herein, which are still within the scope of the invention as defined by the appended claims.

The closed loop flexible member may e.g. have a non-uniform cross-section. The non-uniformity may be different along the circumference of the loop L. It may e.g. be a number of recesses or protrusions adapted to be used to orient the member in a correct angular position (angular in the sense of rotation along the circumference about the optical path P). The cross-section may also be non-circular. It may be square, rectangular, ellipsoid or other shapes being able to provide resilience in the direction of the adjustable distance d.

It may also be noted that the flexible member in the preferred embodiment is clamped between the abutment section on the hand and both the fixture and the optical system on the other hand. The flexible member abuts the circumferential rim 2' of the fixture 2 and also abuts a transparent surface 2a' in a sense forming part of the optical system 2a. Alternatively, there might be no contact between the flexible member and the fixture at all and that all clamping force is transmitted via a transparent member within the perimeter of the fixture. Alternatively, the fixture is designed such that there will be no contact between the flexible member and the optical system and that all the clamping force is transmitted via the fixture as such.

## Claims

1. Mounting system for a camera (1), the mounting system comprising a first part (6) adapted to fixedly support an image sensor (3), and a second part (2) adapted to fixedly support an optical system (2a),
wherein the second part (2) is rotatably adjustably supported by the first part (6) such that a distance (d), along an optical path (P), between the image sensor (3) and the optical system (2a) is adjustable,
wherein the first part (6) and the second part (2) are provided with interacting obliquely oriented surfaces (6d, 2d) such that a relative rotation between the first part (6) and the second part (2) provides adjustment of the adjustable distance (d),
wherein the first part (6) comprises an abutment section (20) which is arranged along a geometrical closed loop (L) around the optical path (P),
a closed loop flexible member (12) which is adapted to be clamped between the second part (2) and the abutment section (20), and which is adapted to flex in response to the adjustment of the adjustable distance (d),
wherein the closed loop flexible member (12) is adapted to sealingly interact with both the first part (6) and the second part (2) such that there is a seal being formed between the first part (6) and the second part (2) and extending around the optical path (P),
**characterised in**
**that** the abutment section (20) comprises a plurality of abutment portions (21) and a plurality of cavities (22) alternatingly arranged along the abutment section (20), and in
**that** the abutment section (20) is formed as a groove, the groove extending along the geometrical closed loop (L) and facing the second part (2).

2. Mounting system according to claim 1, wherein the abutment portions (21) are, relative to the cavities (22), raised along the adjustable distance (d) towards the second part (2).

3. Mounting system according to claim 1 or 2, wherein the abutment portions (21) each have a length (L₂₁) along the circumferential length of the geometrical loop (L) being between 1-15%, preferably between 2-8% of the circumferential length of the geometrical loop (L).

4. Mounting system according to any one of claims 1-3, wherein the abutment portions (21) together in total have a length between 10-75%, preferably between 10-50%, more preferably between 10-30% of the circumferential length of the geometrical loop (L).

5. Mounting system according to any one of claims 1-4, wherein the abutment portions (21) each have a length (L₂₁) along the geometrical loop (L) being between 0.5 and 2 times a cross-sectional width (W) of the groove.

6. Mounting system according to any one of claims 1-5, wherein the closed loop flexible member (12) is formed of a closed loop of elastomeric material, preferably having a hardness of between 20-70° Shore A, preferably 20-60° Shore A, more preferably 25-50° Shore A, and most preferably 25-40° Shore A.

7. Mounting system according to any one of claims 1-6, wherein the closed loop flexible member (12) has a cross-sectional dimension (D'), along the optical path (P), being greater than, preferably 2 times, a difference in distance between the abutment portions (21) and the second part (2) and the cavities (22) and the second part (2).

8. Mounting system according to any one of claims 1-7, wherein the closed loop flexible member (12) has a cross-sectional dimension (D"), across the optical path (P), being greater than a width (W) of the groove in which the closed loop flexible member (12) is arranged.

9. Mounting system according to any one of claims 1-8, wherein the closed loop flexible member (12) has a uniform cross-section, preferably circular.

10. Mounting system according to any one of claims 1-9,
wherein the abutment portions (21) are relative to the cavities (22) raised from a bottom of the groove along the adjustable distance (d) towards the second part (2), and
wherein the abutment portions (21) are raised a distance (H) being between 0.2 to 0.8 times a cross-sectional width (W) of the groove.

11. Mounting system according to any one of claims 1-10, wherein the second part (2) is insertable into the first part (6), wherein the obliquely oriented surfaces (6d) of the first part (6) are provided on an inwardly facing envelope surface and the obliquely oriented surfaces (2d) of the second part (2) are provided on an outwardly facing envelope surface.

12. Camera (1) comprising a mounting system according to any one of claims 1-11, wherein
a body member (6) fixedly supporting an image sensor (3) forms the first part (6) of the mounting system, and
a fixture (2) fixedly supporting an optical system (2a) forms the second part (2) of the mounting system.

## Patentansprüche

1. Montagesystem für eine Kamera (1), wobei das Montagesystem einen ersten Teil (6), der angepasst ist, um einen Bildsensor (3) fest zu unterstützen, und einen zweiten Teil (2) umfasst, der angepasst ist, um ein optisches System (2a) fest zu unterstützen,
wobei der zweite Teil (2) derart drehbar einstellbar durch den ersten Teil (6) unterstützt wird, dass ein Abstand (d) zwischen dem Bildsensor (3) und dem optischen System (2a) entlang einer optischen Weglänge (P) einstellbar ist,
wobei der erste Teil (6) und der zweite Teil (2) mit interagierenden, schräg ausgerichteten Flächen (6d, 2d) versehen sind, derart, dass eine relative Drehung zwischen dem ersten Teil (6) und dem zweiten Teil (2) eine Einstellung des einstellbaren Abstands (d) bereitstellt, wobei der erste Teil (6) einen Anschlagsabschnitt (20) umfasst, der entlang einer geschlossenen geometrischen Schleife (L) um die optische Weglänge (P) herum angeordnet ist,
ein biegsames geschlossenes Schleifenelement (12), das angepasst ist, um zwischen den zweiten Teil (2) und den Anschlagsabschnitt (20) geklemmt zu werden, und das angepasst ist, um sich als Reaktion auf die Einstellung des einstellbaren Abstands (d) zu biegen,
wobei das biegsame geschlossene Schleifenelement (12) angepasst ist, um dichtend mit sowohl dem ersten Teil (6) als auch mit dem zweiten Teil (2) zu interagieren, derart, dass eine Dichtung zwischen dem ersten Teil (6) und dem zweiten Teil (2) gebildet wird und sich um die optische Weglänge (P) erstreckt,
**dadurch gekennzeichnet, dass**:
der Anschlagsabschnitt (20) mehrere Anschlagsabschnitte (21) und mehrere Hohlräume (22) umfasst, die abwechselnd entlang des Anschlagsabschnitts (20) angeordnet sind, und dadurch, dass: der Anschlagsabschnitt (20) als eine Rille gebildet ist, wobei die Rille sich entlang der geschlossenen geometrischen Schleife (L) erstreckt und dem zweiten Teil (2) zugewandt ist.

2. Montagesystem nach Anspruch 1, wobei die Anschlagsabschnitte (21) in Bezug zu den Hohlräumen (22) entlang des einstellbaren Abstandes (d) in Richtung des zweiten Teils (2) erhaben sind.

3. Montagesystem nach Anspruch 1 oder 2, wobei die Anschlagsabschnitte (21) jeweils eine Länge (L₂₁) entlang der Umfangslänge der geometrischen Schleife (L) aufweisen, die zwischen 1 und 15%, vorzugsweise zwischen 2 und 8% der Umfangslänge der geometrischen Schleife (L) beträgt.

4. Montagesystem nach einem der Ansprüche 1 bis 3, wobei die Anschlagsabschnitte (21) zusammen insgesamt eine Länge zwischen 10 und 75%, vorzugsweise zwischen 10 und 50%, noch mehr zu bevorzugen zwischen 10 und 30% der Umfangslänge der geometrischen Schleife (L) aufweisen.

5. Montagesystem nach einem der Ansprüche 1 bis 4, wobei die Anschlagsabschnitte (21) jeweils eine Länge (L₂₁) entlang der geometrischen Schleife (L) aufweisen, die zwischen dem 0,5- und 2-fachen einer Querschnittsbreite (W) der Rille beträgt.

6. Montagesystem nach einem der Ansprüche 1 bis 5, wobei das biegsame geschlossene Schleifenelement (12) aus einer geschlossenen Schleife aus Elastomermaterial gebildet ist, das vorzugsweise eine Härte zwischen 20 und 70° Shore A, vorzugsweise 20 und 60° Shore A, noch mehr zu bevorzugen 25 und 50° Shore A und am meisten zu bevorzugen 25 und 40° Shore A aufweist.

7. Montagesystem nach einem der Ansprüche 1 bis 6, wobei das biegsame geschlossene Schleifenelement (12) eine Querschnittsabmessung (D') entlang der optischen Weglänge (P) aufweist, die größer als vorzugsweise das 2-fache einer Differenz des Abstands zwischen den Anschlagsabschnitten (21) und dem zweiten Teil (2) und den Hohlräumen (22) und dem zweiten Teil (2) ist.

8. Montagesystem nach einem der Ansprüche 1 bis 7, wobei das biegsame geschlossene Schleifenelement (12) eine Querschnittsabmessung (D") durch die optische Weglänge (P) aufweist, die größer als eine Breite (W) der Rille ist, in der das biegsame geschlossene Schleifenelement (12) angeordnet ist.

9. Montagesystem nach einem der Ansprüche 1 bis 8, wobei das biegsame geschlossene Schleifenelement (12) einen gleichförmigen, vorzugsweise kreisförmigen, Querschnitt aufweist.

10. Montagesystem nach einem der Ansprüche 1 bis 9,
wobei die Anschlagsabschnitte (21) in Bezug auf die Hohlräume (22) von einem Boden der Rille entlang des einstellbaren Abstands (d) in Richtung des zweiten Teils (2) erhaben sind, und
wobei die Anschlagsabschnitte (21) um einen Abstand (H), der zwischen dem 0,2- und 0,8-fachen einer Querschnittsbreite (W) der Rille beträgt, erhaben sind.

11. Montagesystem nach einem der Ansprüche 1 bis 10, wobei der zweite Teil (2) in den ersten Teil (6) einsetzbar ist, wobei die schräg ausgerichteten Flächen (6d) des ersten Teils (6) auf einer nach innen gerichteten Hüllenfläche bereitgestellt sind und die schräg ausgerichteten Flächen (2d) des zweiten Teils (2) auf einer nach außen gerichteten Hüllenfläche bereitgestellt sind.

12. Kamera (1), die ein Montagesystem nach einem der Ansprüche 1 bis 11 umfasst, wobei:
ein Körperelement (6), das einen Bildsensor (3) fest unterstützt, den ersten Teil (6) des Montagesystems bildet, und
ein Halter (2), der ein optisches System (2a) fest unterstützt, den zweiten Teil (2) des Montagesystems bildet.

## Revendications

1. Système de montage pour une caméra (1), le système de montage comprenant une première partie (6) adaptée pour supporter de manière fixe un capteur d'image (3), et une deuxième partie (2) adaptée pour supporter de manière fixe un système optique (2a), dans lequel la deuxième partie (2) est supportée de manière ajustable et rotative par la première partie (6) de telle sorte qu'une distance (d), le long d'un chemin optique (P), entre le capteur d'image (3) et le système optique (2a) est ajustable,
dans lequel la première partie (6) et la deuxième partie (2) sont pourvues de surfaces d'interaction à orientation oblique (6d, 2d) de telle sorte qu'une rotation relative entre la première partie (6) et la deuxième partie (2) procure un ajustement de la distance ajustable (d), dans lequel la première partie (6) comprend une section de butée (20) qui est agencée le long d'une boucle fermée géométrique (L) autour du chemin optique (P), un élément flexible à boucle fermée (12) qui est adapté pour être calé entre la deuxième partie (2) et la section de butée (20), et qui est adapté pour fléchir en réponse à l'ajustement de la distance ajustable (d),
dans lequel l'élément flexible à boucle fermée (12) est adapté pour interagir de manière étanche avec la première partie (6) et la deuxième partie (2) de telle sorte qu'un joint d'étanchéité est formé entre la première partie (6) et la deuxième partie (2) et s'étend autour du chemin optique (P),
**caractérisé**
**en ce que** la section de butée (20) comprend une pluralité de portions de butée (21) et une pluralité de cavités (22) agencées de manière alternée le long de la section de butée (20), et
**en ce que** la section de butée (20) est conformée comme une rainure, la rainure s'étendant le long de la boucle fermée géométrique (L) et faisant face à la deuxième partie (2).

2. Système de montage selon la revendication 1, dans lequel les portions de butée (21) sont surélevées par rapport aux cavités (22) le long de la distance ajustable (d) vers la deuxième partie (2).

3. Système de montage selon la revendication 1 ou 2, dans lequel les portions de butée (21) présentent chacune une longueur (L₂₁) le long de la longueur circonférentielle de la boucle géométrique (L) comprise entre 1 % et 15 %, et de préférence entre 2 % et 8 %, de la longueur circonférentielle de la boucle géométrique (L).

4. Système de montage selon l'une quelconque des revendications 1 à 3, dans lequel les portions de butée (21) présentent conjointement une longueur totale comprise entre 10 % et 75 %, de préférence entre 10 % et 50 %, et de préférence encore entre 10 % et 30%, de la longueur circonférentielle de la boucle géométrique (L).

5. Système de montage selon l'une quelconque des revendications 1 à 4, dans lequel les portions de butée (21) présentent chacune une longueur (L₂₁) le long de la boucle géométrique (L) comprise entre 0,5 et 2 fois une largeur en section transversale (W) de la rainure.

6. Système de montage selon l'une quelconque des revendications 1 à 5, dans lequel l'élément flexible à boucle fermée (12) est conformé comme une boucle fermée de matériau élastomère présentant de préférence une dureté comprise entre 20° et 70° Shore A, de préférence entre 20° et 60° Shore A, de préférence encore entre 25° et 50° Shore A, et de manière préférée entre toutes entre 25° et 40° Shore A.

7. Système de montage selon l'une quelconque des revendications 1 à 6, dans lequel l'élément flexible à boucle fermée (12) présente le long du chemin optique (P) une dimension en section transversale (D') supérieure, de préférence 2 fois supérieure, à une différence de distance entre les portions de butée (21) et la deuxième partie (2) d'une part, et les cavités (22) et la deuxième partie (2) d'autre part.

8. Système de montage selon l'une quelconque des revendications 1 à 7, dans lequel l'élément flexible à boucle fermée (12) présente une dimension en section transversale (D"), traversant le chemin optique (P), supérieure à une largeur (W) de la rainure dans laquelle est agencé l'élément flexible à boucle fermée (12).

9. Système de montage selon l'une quelconque des revendications 1 à 8, dans lequel l'élément flexible à boucle fermée (12) présente une section transversale uniforme, de préférence circulaire.

10. Système de montage selon l'une quelconque des revendications 1 à 9, dans lequel les portions de butée (21) sont surélevées par rapport aux cavités (22) depuis le fond de la rainure le long de la distance ajustable (d) vers la deuxième partie (2), et
dans lequel les portions de butée (21) sont surélevées d'une distance (H) comprise entre 0,2 et 0,8 fois la largeur en section transversale (W) de la rainure.

11. Système de montage selon l'une quelconque des revendications 1 à 10, dans lequel la deuxième partie (2) peut être insérée dans la première partie (6), dans lequel les surfaces orientées de façon oblique (6d) de la première partie (6) sont pourvues sur une surface d'enveloppe faisant face à l'intérieur et les surfaces orientées de façon oblique (2d) de la deuxième partie (2) sont pourvues sur une surface d'enveloppe faisant face à l'extérieur.

12. Caméra (1) comprenant un système de montage selon l'une quelconque des revendications 1 à 11, dans laquelle un élément de corps (6) supportant de manière fixe un capteur d'image (3) forme la première partie (6) du système de montage, et
une fixation (2) supportant un système optique (2a) de manière fixe forme la deuxième partie (2) du système de montage.
